# EUROPEAN PATENT APPLICATION

(11) **EP 2 312 910 A1**
(43) Date of publication of application: **20.04.2011**
(21) Application number: 10179812.2
(22) Date of filing: 27.09.2010
(51) Int. Cl.: H05B 6/36

(54) **Heating device usable with cooking appliance, manufacturing method thereof, and cooking appliance**

(30) Priority: 13.10.2009 KR 20090097266
(71) Applicant: Samsung Electronics Co., Ltd., Suwon-si, Gyeonggi-do 506-762 (KR)
(72) Inventor: Kim, Hyang Ki, Gyeonggi-do (KR); Hong, Seok Weon, Gyeonggi-do (KR); Lee, Sung Ho, Gyeonggi-do (KR); Jang, Seong Deog, Gyeonggi-do (KR); Kim, Dae Rae, Gyeonggi-do (KR); Lee, Se Min, Gyeonggi-do (KR); Lee, Kil Young, Gyeonggi-do (KR); Jung, Won Sick, Gyeonggi-do (KR)
(74) Representative: Grünecker, Kinkeldey, Stockmair & Schwanhäusser Anwaltssozietät

(57) **Abstract**

Disclosed herein are a heating device usable with a cooking appliance and a manufacturing method thereof to assure economical formation and arrangement of a working coil. The heating device usable with a cooking appliance includes a working coil formed by spirally winding a conducting wire, and a sheet member arranged to support the working coil and having a supporting plane facing the working coil. Individual windings of the conducting wire, which constitute individual turns of the working coil, are spaced apart from neighboring windings by a predetermined distance. Spaces are defined between the individual neighboring windings of the conducting wire without a structure to guide the working coil.

## Description

### BACKGROUND

### 1. Field

Embodiments of the present invention relate to a heating device usable with a cooking appliance.

### 2. Description of the Related Art

Induction heating devices are used as heat sources to heat food in cooking appliances. These induction heating devices generate heat by use of eddy current loss, which is generated in a cooking container placed in an alternating current magnetic field, and by hysteresis loss.

Cooking appliances using induction heating devices include a cooking panel, on which a cooking container is placed, and at least one working coil arranged beneath the cooking panel to inductively heat the cooking container.

These cooking appliances discharge no toxic gas and keep the cooking panel at a relatively low temperature during cooking, thus exhibiting excellent safety and greater energy efficiency than other cooking appliances using self-heating coils or gas burners.

Generally, a working coil is formed by spirally winding a wire. Material costs of a conducting wire used in the manufacture of a working coil occupy a large part of the entire heating device manufacturing costs.

### SUMMARY

Therefore, it is an aspect of the at least one embodiment to provide a heating device usable with a cooking appliance and a manufacturing method thereof, which may achieve economical formation and arrangement of a working coil.

It is an aspect of the at least one embodiment to provide a heating device usable with a cooking appliance having a simplified configuration.

Additional aspects of the at least one embodiment will be set forth in part in the description which follows and, in part, will be obvious from the description, or may be learned by practice of embodiments of the invention.

The foregoing and/or other aspects are achieved by providing a heating device usable with a cooking appliance including a working coil which is a conducting wire spirally wound, and a sheet member arranged to support the working coil and having a supporting plane facing the working coil, individual windings of the conducting wire, which constitute individual turns of the working coil, being spaced apart from neighboring windings by a predetermined distance, and spaces being defined between the individual neighboring windings of the conducting wire without a structure to guide the working coil.

The working coil may be fixed to the sheet member using an adhesive.

At least a part of the adhesive may be introduced into the spaces defined between the individual windings of the conducting wire.

The adhesive may include a silicon sealant.

The individual windings of the conducting wire may be equidistantly arranged.

The supporting plane of the sheet member may be formed of a flat surface.

The sheet member may be made of a flexible material.

The sheet member may include a mica sheet.

The heating device may further include a supporting member arranged beneath the sheet member, and a ferrite piece arranged between the supporting member and the working coil, and the supporting member may include a fixing piece to fix the ferrite piece to the supporting member.

The foregoing and/or other aspects are achieved by providing a method of manufacturing a heating device usable with a cooking appliance including preparing a winding frame having spiral guide grooves radially spaced apart from one another by a predetermined distance, winding a conducting wire along the guide grooves of the winding frame to form a working coil, placing the working coil onto a sheet member, and fixing the working coil to the sheet member after placing the working coil onto the sheet member.

The method may further include removing the winding frame from the sheet member when the working coil is fixed to the sheet member.

The method may further include performing a self-bonding process by applying electric current to the working coil after the working coil is wound along the winding frame.

The working coil may be placed onto the sheet member in the winding frame and may be fixed to the sheet member in the winding frame.

The method may further include removing the working coil from the winding frame before placing the working coil onto the sheet member and fixing the working coil to the sheet member. The winding frame may include at least one opening extending in a radial direction of the winding frame and arranged in a winding direction of the conducting wire, and the working coil may be removed from the winding frame by pushing the working coil, through the at least one opening.

The method may further include applying an adhesive to the sheet member on which the working coil is placed to fix the working coil to the sheet member.

The winding frame may include at least one opening extending in a radial direction of the winding frame and arranged in a winding direction of the conducting wire.

The fixing of the working coil to the sheet member may include arranging the winding frame, in which the conducting wire is wound, and the sheet member to face each other, and applying the adhesive through the opening of the winding frame.

The guide grooves may be equidistantly arranged in a radial direction of the winding frame.

The sheet member may include a supporting plane to support the working coil, and the supporting plane may be formed of a flat surface having no guide structure to determine a position of the working coil.

The method may further include bending the sheet member to which the working coil is fixed.

In accordance with a further aspect of the present invention, a cooking appliance includes a cooking panel configured to received a cooking container, a working coil, the working coil being a conducting wire spirally wound and arranged beneath the cooking panel to heat the cooking container placed on the cooking panel, a sheet member having a supporting plane to support the working coil, and an adhesive to fix the working coil to the sheet member, windings of the conducting wire, which constitute individual turns of the working coil, being spaced apart from neighboring windings by a predetermined distance, and at least a part of the adhesive being introduced into spaces defined between the individual windings of the conducting wire and being attached to the supporting plane of the sheet member.

The individual windings of the conducting wire may be equidistantly arranged.

The sheet member may be made of a flexible electrically insulating material.

The cooking appliance may further include a ferrite piece arranged beneath the sheet member, a supporting member arranged beneath the ferrite piece, and a fixing piece disposed on the supporting member to fix the ferrite piece to the supporting member.

### BRIEF DESCRIPTION OF THE DRAWINGS

These and/or other aspects will become apparent and more readily appreciated from the following description of the embodiments, taken in conjunction with the accompanying drawings of which:
FIG. 1 is a perspective view illustrating an external appearance of a cooking appliance according to at least one embodiment;
FIG. 2 is a view illustrating an internal configuration of the cooking appliance shown in FIG. 1;
FIG. 3 is a perspective view illustrating a cook-top according to at least one embodiment;
FIG. 4 is a perspective view illustrating a heating device for the cook-top of FIG. 3;
FIG. 5 is a sectional view taken along the line I-I of FIG. 3;
FIG. 6 is a perspective view illustrating a winding frame used in the manufacture of a heating device according to at least one embodiment; and
FIGS. 7 and 8 are views illustrating a method of manufacturing a heating device according to at least one embodiment.
FIG. 9 is a flowchart to explain the method of manufacturing a heating device according to at least one embodiment.

### DETAILED DESCRIPTION

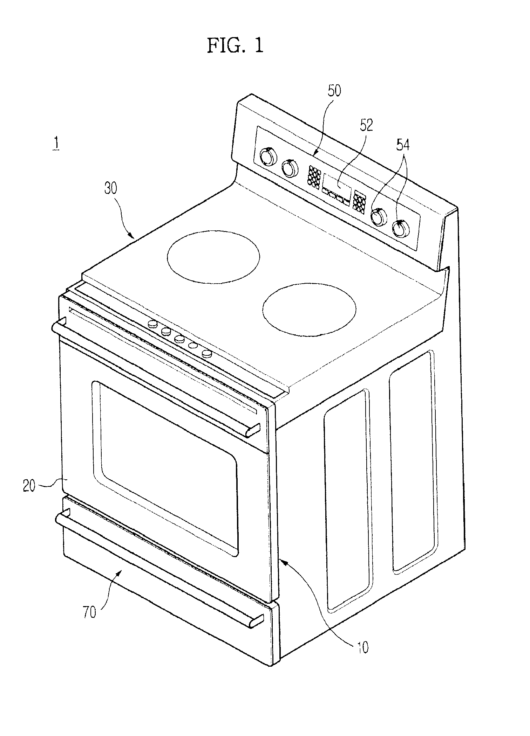

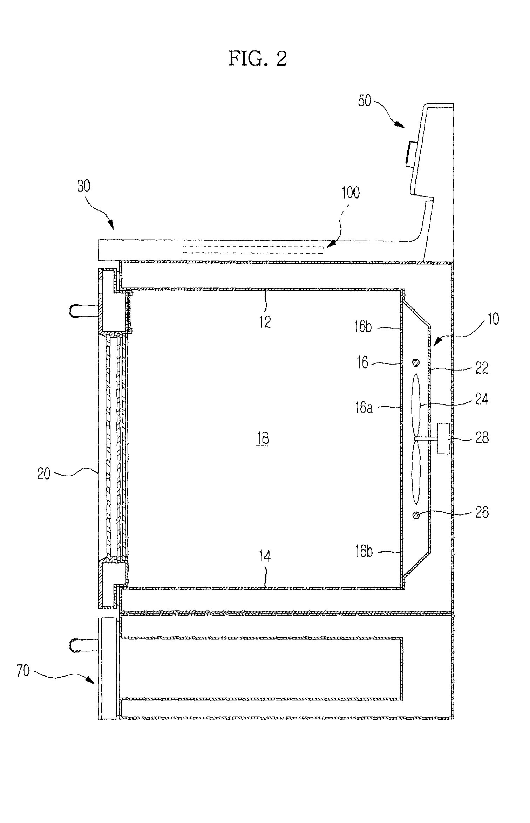

Reference will now be made in detail to at least one embodiment, examples of which are illustrated in the accompanying drawings, wherein like reference numerals refer to like elements throughout. FIG. 1 is a perspective view illustrating an external appearance of a cooking appliance according to at least one embodiment, and FIG. 2 is a view illustrating an internal configuration of the cooking appliance shown in FIG. 1.

As shown in FIGS. 1 and 2, the cooking appliance 1 may include an oven 10, a cook-top 30, and a drawer 70. The oven 10 is configured to heat food received in an enclosed space therein. The cook-top 30 is provided at the top of the oven 10 such that a cooking container to cook food is placed on the cook-top 30. The drawer 70 is provided at the bottom of the oven 10 to perform a storage function or a simple cooking function.

The oven 10 cooks food by heat convection. The oven 10 includes a cooking chamber 18 defined by an upper plate 12, a lower plate 14, two lateral plates (not shown), and a rear plate 16, and an oven door 20 to open or close an open front side of the cooking chamber 18.

A fan cover 22 is coupled to an outer surface of the rear plate 16. A convection fan 24 is mounted inside the fan cover 22 and serves to circulate interior air of the cooking chamber 18. A convection heater 26 is installed around the convection fan 24, and a fan motor 28 to drive the convection fan 24 is installed behind the fan cover 22.

A plurality of suction holes 16a to suction the interior air of the cooking chamber 18 is formed in and around the center of the rear plate 16 facing the convection fan 24. A plurality of discharge holes 16b to supply hot air into the cooking chamber 18 is formed in an edge region of the rear plate 16.

The oven 10 includes a control panel 50 to control operations of the oven 10. The control panel 50 includes a display 52 to indicate an operation status of the oven 10 and operating knobs 54 or any other type of inputting device to adjust operations of the oven 10.

If a user operates the oven 10 using the control panel 50 in a state in which food is received in the cooking chamber 18, the convection heater 26 generates heat and the convection fan 24 is rotated by the fan motor 28. Thereby, after the interior air of the cooking chamber 18 is suctioned through the suction holes 16a and is heated by the convection heater 26, the resulting hot air is supplied into the cooking chamber 18 through the discharge holes 16b. The food received in the cooking chamber 18 may be cooked by the hot air circulating within the cooking chamber 18.

The drawer 70 may define a discrete cooking space. A heater (not shown) may be provided in the drawer 70, to warm the cooked food or to enable simple food cooking.

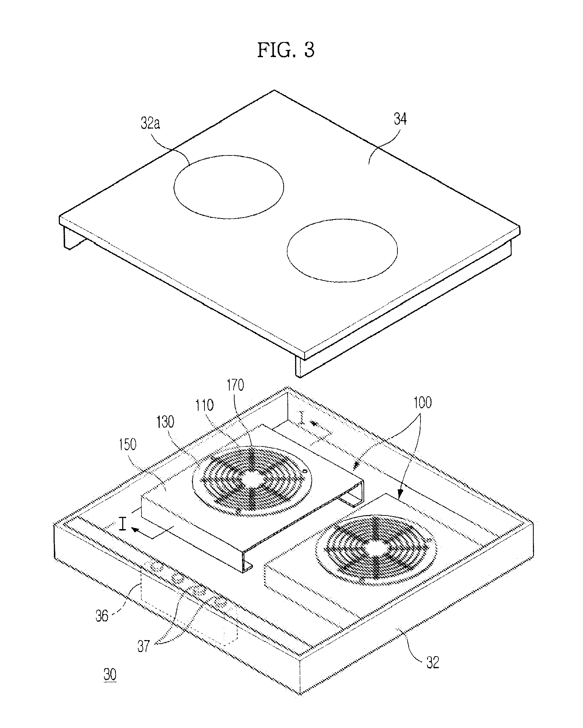

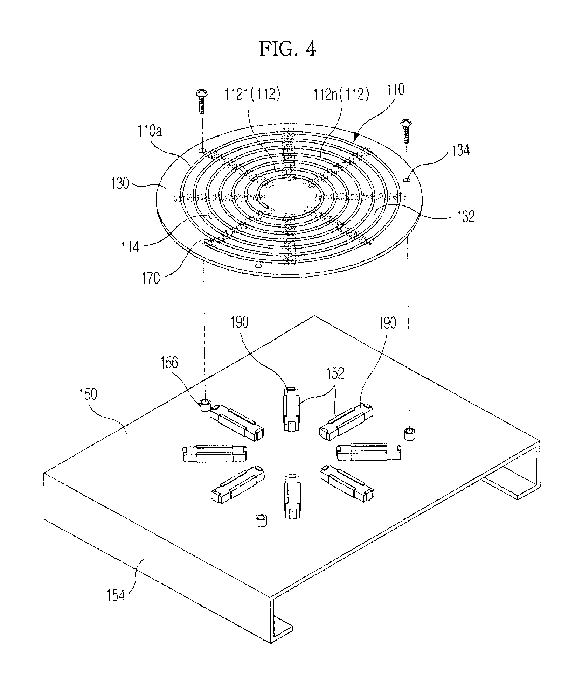

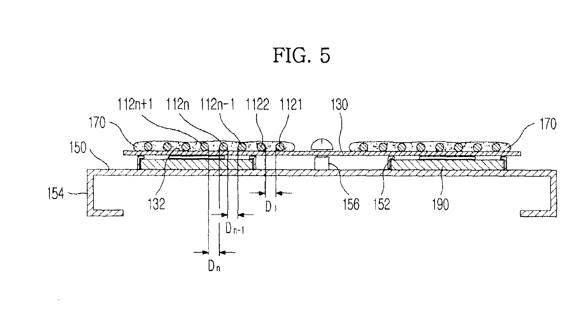

FIG. 3 is a perspective view illustrating the cook-top according to at least one embodiment, FIG. 4 is a perspective view illustrating a heating device for the cook-top of FIG. 3, and FIG. 5 is a sectional view taken along the line I-I of FIG. 3.

As shown in FIG. 3, the cook-top 30 includes a case 32, a cooking panel 34, a heating device 100, and a control unit 36.

The case 32 receives a variety of structural elements and electric elements, including the heating device 100 and the control unit 36.

The cooking panel 34 is arranged at the top of the case 32 and takes the form of a flat plate on which a cooking container is placed. The cooking panel 34 may be made of a reinforced glass material resistant to breakage or scratching, for example.

The heating device 100 is installed in the case 32 to inductively heat the cooking container placed on the cooking panel 34. The cooking panel 34 has a cooking region 32a corresponding to the heating device 100. Although FIG. 3 illustrates two heating devices by way of example, the number of the heating devices may be changed.

The control unit 36 controls operation of the cook-top 30. The control unit 36 includes an operating unit 37 to allow the user to input various commands related to cooking. The control unit 36 controls the heating device 100 according to the commands input via the operating unit 37, which may be any type of.input device

As shown in FIGS. 3 to 5, the heating device 100 includes a working coil 110, a sheet member 130, and a supporting member 150.

The working coil 110 creates an alternating current magnetic field upon receiving voltage. The alternating current magnetic field acts on the cooking container placed on the cooking panel 34, causing heat generation.

The working coil 110 is formed by spirally winding a conducting wire 110a. The conducting wire 110a may be a so-called Litz wire formed by twisting a number of fine copper wires each coated with an insulating layer, for example.

The conducting wire 110a includes a plurality of windings 112 constituting individual turns of the working coil 110. For example, a first winding 1121, as a radial innermost winding of the working coil 110, constitutes a first turn of the working coil 110, and an n^{th} winding 112n constitutes an n^{th} turn of the working coil 110.

Each winding 112 of the conducting wire 110a constituting the working coil 110 is spaced apart from the neighboring windings by predetermined distances. For example, the first winding 1121 of the conducting wire 110a is spaced apart from a second winding 1122 by a predetermined distance D1. Also, the n^{th} winding 112n of the conducting wire 110a is spaced apart from the neighboring n-1^{th} winding 112n-1 and n+1^{th} winding 112n+1 by predetermined distances Dn-1 and Dn respectively.

Conventional working coils are generally densely wound such that individual windings of a conducting wire come into close contact with one another. However, an excessively long conducting wire may be needed when manufacturing a desired size of a working coil by densely winding a conducting wire and thus, this manufacturing method is uneconomical.

In an alternative method, a working coil is divided into at least two sections, such that the two sections, around which a conducting wire is densely wound, are spaced apart from each other by a predetermined distance. Although this method may reduce consumption of the conducting wire required for the manufacture of the working coil to some extent, the conducting wire is densely and closely wound around each section, thus having a limit in material cost savings. In addition, if a cooking container is placed above a gap between the two spaced sections, i.e. above a wireless region, this may cause deterioration in heating efficiency.

On the other hand, when the respective windings 112 of the conducting wire 110a are spaced apart from one another according to the present embodiment, the amount of the conducting wire required for the manufacture of the working coil 110 may be reduced, achieving material cost savings and preventing deterioration in cooking performance.

The respective windings 112 of the conducting wire 110a may be arranged equidistantly. Specifically, the distances D1,..., Dn,... between the respective windings 112 may be kept constant.

The sheet member 130 is arranged beneath the working coil 110 and serves to support the working coil 110. The sheet member 130 has a supporting plane 132 facing the working coil 110.

The sheet member 130 has no structure to guide the working coil 110. Specifically, the sheet member 130 has no guide structure to allow the respective windings 112 of the working coil 110 to be spaced apart from one another. In a state in which the working coil 110 is arranged on the sheet member 130, spaces 114 are defined between the respective neighboring windings 112 of the conducting wire 110a.

When providing the sheet member 130 with no structure to guide the working coil 110, the sheet member 130 may have a simplified configuration, and thus may be manufactured with reduced costs.

The supporting plane 132 of the sheet member 130 may be formed of a flat surface. Once being placed on the supporting plane 132 of the sheet member 130, the working coil 110 may be attached to the supporting plane 132 by use of an adhesive 170 or any other type of sticking mechanism. As shown in FIG. 4, the adhesive 170 may be applied at a plurality of circumferential positions of the working coil 110 so as to extend in a radial direction of the working coil 110.

A part of the adhesive 170 is introduced into the spaces 114 defined between the respective windings 112 of the working coil 110. The adhesive 170 inside each space 114 is adhered to the supporting plane 132 of the sheet member 130 while connecting the neighboring two windings 112 to each other, thereby allowing the working coil 110 to be fixed to the sheet member 130.

The adhesive 170 may be a silicon sealant, but is not limited thereto, and a variety of adhesive compounds may be used.

The sheet member 130 may be made of an electrically-insulating material. For example, the sheet member 130 may be made of a mica sheet. The sheet member 130 serves not only to support the working coil 110, but also to electrically insulate elements arranged beneath the sheet member 130 from the working coil 110.

In addition, the sheet member 130 may be made of a flexible material. The flexible sheet member 130 is deformable, and thus enables deformation of the working coil 110 fixed to the sheet member 130. The resulting deformable working coil assembly is applicable to cooking appliances designed to heat cooking containers having special shapes.

As shown in FIGS. 4 and 5, the supporting member 150 is arranged beneath the sheet member 130. The supporting member 150 includes a plurality of fixing pieces 152 arranged in a circumferential direction, and each fixing piece 152 is provided with a ferrite piece 190. The ferrite piece 190 prevents a magnetic field generated by the working coil 110 from being propagated downward of the supporting member 150.

The supporting member 150 includes downwardly-extending legs 154, and the legs 154 are fixed to the case 32. The supporting member 150 may further include a plurality of coupling bosses 156 protruding upward toward the sheet member 130. The seat member 130 may include coupling holes 134 formed in positions corresponding to the coupling bosses 156 of the supporting member 150. The sheet member 130 may be fixed to the supporting member 150 using fastening members, such as screws, which are fastened to the coupling bosses 156 through the coupling holes 134.

A variety of electric elements (not shown) required to drive the working coil 110 are arranged beneath the supporting member 150. The supporting member 150 may be made of an aluminum-based material to electromagnetically isolate the working coil 110 and the electric elements from each other.

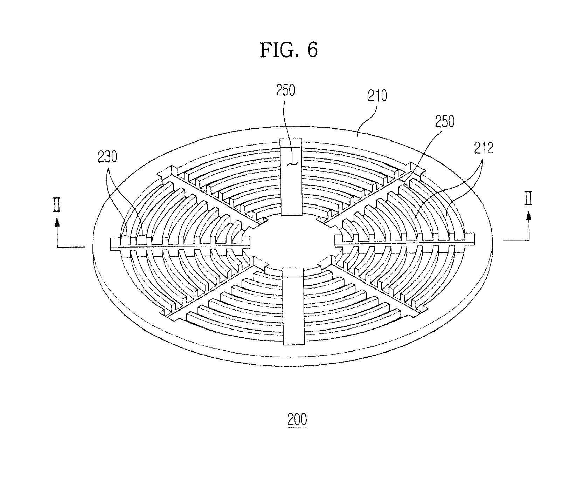

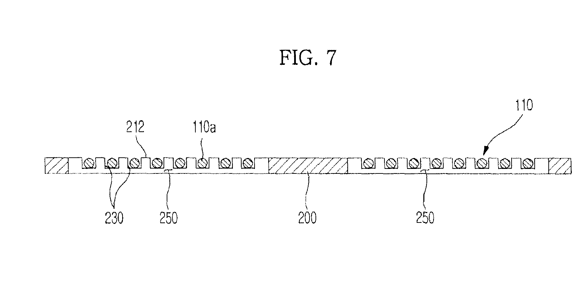

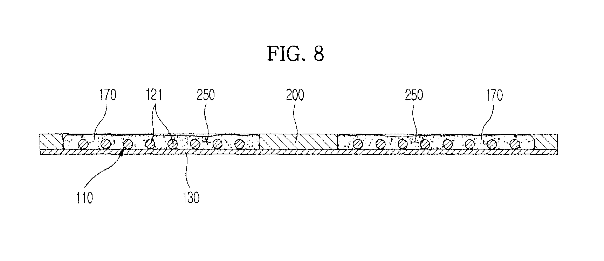

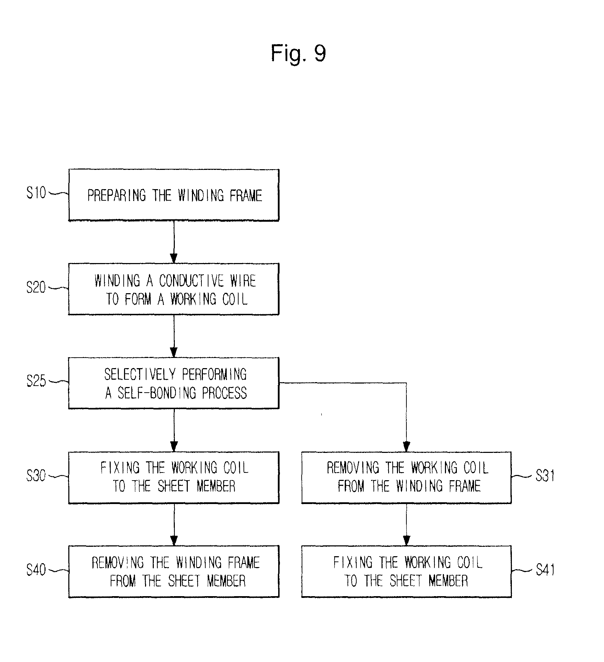

Hereinafter, a method of manufacturing the heating device according to at least one embodiment will be described. FIG. 6 is a perspective view illustrating a winding frame used in the manufacture of the heating device according to at least one embodiment, and FIGS. 7 and 8 are views illustrating a method of manufacturing the heating device according to at least one embodiment. The sectional views of the winding frame shown in FIGS. 7 and 8 are taken along the line II-II of FIG. 6. FIG. 9 is a flowchart describing the method of manufacturing the heating device according to a least one embodiment.

First, as shown in FIG. 6 and described in FIG. 9, a winding frame 200 is prepared (S10). The winding frame 200 includes a disc-shaped body 210, and guide grooves 230 and openings 250 formed in the body 210.

The guide grooves 230 are spirally formed. One of the guide grooves 230 formed at any one location of the winding frame 200 is spaced apart from the radially neighboring guide grooves 230 by a predetermined distance with a partition 212 interposed therebetween. The guide grooves 230 may be equidistantly arranged in a radial direction of the winding frame 200.

The openings 250 are arranged in a circumferential direction of the winding frame 200, and each opening 250 extends in a radial direction of the winding frame 200.

As the conducting wire 110a is spirally wound along the guide grooves 230 of the winding frame 200 to form the working coil 110 (S20), the working coil 110 is placed on the winding frame 200 as shown in FIG. 7. A self-bonding process may be selectively performed in a state in which the working coil 10 is placed on the winding frame 200 (S25). The self-bonding process is a process of hardening the working coil 110 by applying electric current to the working coil 110.

Next, as shown in FIG. 8 and described in FIG. 9, the sheet member 130 is positioned to face the working coil 110 placed on the winding frame 200, and then the adhesive 170 is applied to the working coil 110 through the openings 250 of the winding frame 200. As a part of the adhesive 170 is introduced into the spaces 114 between the respective windings 112 of the working coil 110, the working coil 110 is fixed to the sheet member 130 (S30). Once the working coil 110 is fixed to the sheet member 130 using the adhesive 170, the winding frame 200 is removed (S40).

The working coil 110 may be fixed to the sheet member 130 using an alternative method. More specifically, after pushing the working coil 110 through the openings 250 to separate the working coil 110 from the winding frame 200 (S31) and transferring the working coil 110 to the sheet member 130 without the winding frame 200, the adhesive 170 may be applied to the working coil 110 placed on the sheet member 130 (S41).

With the above described method, even though the sheet member 130 has no structure to guide the respective windings 112 of the working coil 110, the respective windings 112 may be arranged on the sheet member 130 while stably maintaining a predetermined distance therebetween.

In the meantime, if it is necessary to deform the working coil due to use of a cooking container having a special shape, the sheet member 130, to which the working coil 110 is fixed, may be bent to deform the working coil 110 into a desired shape.

As apparent from the above description, a heating device usable with a cooking appliance according to the at least one embodiment may be manufactured with reduced material costs owing to effective arrangement of a conducting wire constituting a working coil. Further, it may be possible to achieve a simplified installation configuration of the working coil.

Although at least one embodiment has been shown and described, it would be appreciated by those skilled in the art that changes may be made in these embodiments without departing from the principles and spirit of the invention, the scope of which is defined in the claims and their equivalents.

## Claims

1. A heating device usable with a cooking appliance, the heating device comprising:
a working coil formed by spirally winding a conducting wire; and
a sheet member arranged to support the working coil and having a supporting plane facing the working coil,
wherein individual windings of the conducting wire, which constitute individual turns of the working coil, are spaced apart from neighboring windings by a predetermined distance, and
wherein spaces are defined between the individual neighboring windings of the conducting wire without a structure to guide the working coil.

2. The heating device according to claim 1, wherein the working coil is fixed to the sheet member by use of an adhesive.

3. The heating device according to claim 2, wherein at least a part of the adhesive is introduced into the spaces defined between the individual windings of the conducting wire.

4. The heating device according to claim 2, wherein the adhesive includes a silicon sealant.

5. The heating device according to any one of claims 1 to 4, wherein the individual windings of the conducting wire are equidistantly arranged.

6. The heating device according to any one of claims 1 to 5, wherein the supporting plane of the sheet member is formed of a flat surface.

7. The heating device according to claim any one of claims 1 to 6, wherein the sheet member is made of a flexible material.

8. The heating device according to any one of claims 1 to 7, wherein the sheet member includes a mica sheet.

9. The heating device according to any one of claims 1 to 8, further comprising:
a supporting member arranged beneath the sheet member; and
a ferrite piece arranged between the supporting member and the working coil,
wherein the supporting member includes a fixing piece to fix the ferrite piece.

10. A method of manufacturing a heating device usable with a cooking appliance, the method comprising:
preparing a winding frame having spiral guide grooves radially spaced apart from one another by a predetermined distance;
forming a working coil by winding a conducting wire along the guide grooves of the winding frame; and
fixing the working coil to the sheet member after moving the working coil placed on the winding frame to the sheet member.

11. The method according to claim 10, wherein the working coil is fixed to the sheet member by use of an adhesive.

12. The method according to claim 11, wherein the winding frame includes at least one opening extending in a radial direction of the winding frame and arranged in a winding direction of the conducting wire.

13. The method according to claim 12, wherein the fixing of the working coil to the sheet member includes:
arranging the winding frame, in which the conducting wire is wound, and the sheet member to face each other; and
applying the adhesive through the opening of the winding frame.

14. The method according to any one of claims 10 to 13, wherein:
the sheet member includes a supporting plane to support the working coil; and
the supporting plane is formed of a flat surface having no guide structure to determine a position of the working coil.

15. The method according to any one of claims 10 to 14, further comprising bending the sheet member to which the working coil is fixed.
